# EUROPÄISCHE PATENTSCHRIFT

(11) **EP 2 776 723 B1**
(45) Veröffentlichungstag und Bekanntmachung des Hinweises auf die Patenterteilung: **06.01.2016**
(21) Anmeldenummer: 12788415.3
(22) Anmeldetag: 10.10.2012
(51) Int. Cl.: F16C 11/06, F16C 43/02, F16C 23/04

(54) **AXIALVERBINDUNG**
AXIAL CONNECTION
CONNEXION AXIALE

(30) Priorität: 11.11.2011 AT 16802011
(43) Veröffentlichungstag der Anmeldung: 17.09.2014
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte KG
(86) Internationale Anmeldenummer: PCT/AT2012/000254
(87) Internationale Veröffentlichungsnummer: WO 2013/067554

(56) Entgegenhaltungen:
- US-A- 2 312 648
- US-A- 4 251 122
- US-A- 5 219 231
- US-A- 5 762 424
- US-A1- 2004 022 464

## Beschreibung

Die Erfindung betrifft eine Axialverbindung mit einem Schwenkbereich gemäß dem Oberbegriff des Patentanspruches 1.

Bekannte Axialverbindungen sind Bolzen-Steckverbindungen, welche eine Übertragung von Axialkräften und eine Verschwenkung um die Achse des Bolzens ermöglichen. Nachteilig dabei ist, dass lediglich eine Verschwenkung um eine Achse möglich ist.

Aus der US 5 219 231 A, der US 5 762 424 A, der US 2004/022464 A1, der US 2 312 648 A und der US 4 251 122 A sind Axialverbinder bekannt, welche um zwei Achsen verschwenkbar sind.

Aus der DE 660 407 C ist ein Axialverbinder mit einem mehrteiligen Kernelement bekannt, welche Teile separat in die Schale eingeführt und dort zu dem Kernelement zusammengefügt werden können.

Aufgabe der Erfindung ist es eine Axialverbindung der eingangs genannten Art anzugeben, mit welcher die genannten Nachteile vermieden werden können, mit welcher eine hohe Bewegbarkeit erreicht werden kann, mit der auch Hülsen gelagert werden können und das eine kompakte Bauform ermöglicht.

Erfindungsgemäß wird dies durch die Merkmale des Patentanspruches 1 erreicht.

Dadurch ergibt sich der Vorteil, dass die Axialverbindung einfach als lösbare Verbindung bereitgestellt werden kann. Das Schalenelement kann maschinell gefertigt werden und einfach in komplexe Konstruktionselemente eingebracht werden. Insbesondere kann eine spanende Bearbeitung vorgesehen sein.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine Ausführungsform einer Axialverbindung in axonometrischer Darstellung;
Fig. 2 die Axialverbindung gemäß Fig. 1 in Seitenansicht;
Fig. 3 die Axialverbindung gemäß Fig. 1 in Draufsicht;
Fig. 4 bis 15 Zwischenschritte beim Zusammenbau der Axialverbindung gemäß Fig. 1, jeweils in axonometrischer Darstellung, Draufsicht und Seitenansicht;
Fig. 16 und 17 jeweils axonometrische Darstellungen des Schalenelementes der Axialverbindung nach Fig. 1;
Fig. 18 eine Seitenansicht des Schalenelementes nach Fig. 16 und 17;
Fig. 19 und 20 eine Ausführungsform eines mit einer Axialverbindung mit konischer Durchgangsöffnung gelagerten Gleichgangszylinders, einmal in Draufsicht und einmal im Schnitt gemäß den Zeichen BB; und
Fig. 21 und 22 eine Ausführungsform eines mit einer Axialverbindung mit gerader Durchgangsöffnung gelagerten Gleichgangszylinders, einmal in Draufsicht und einmal im Schnitt gemäß den Zeichen BB.

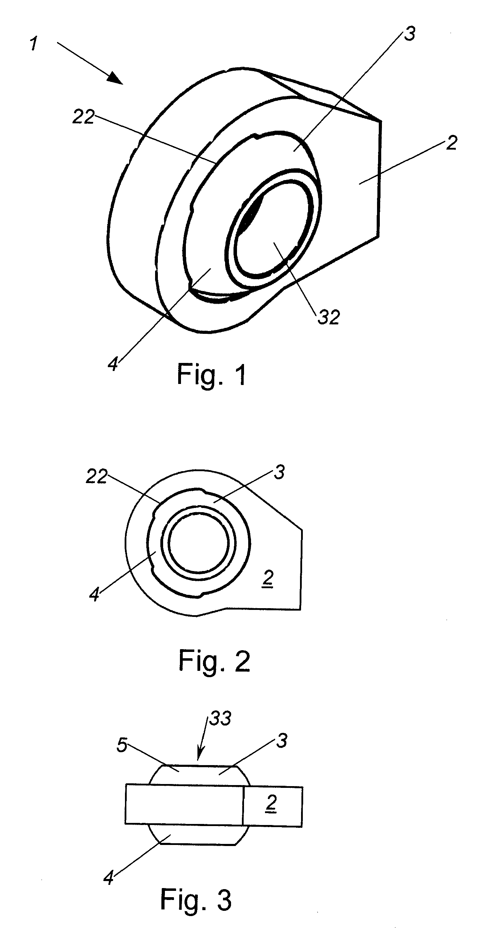

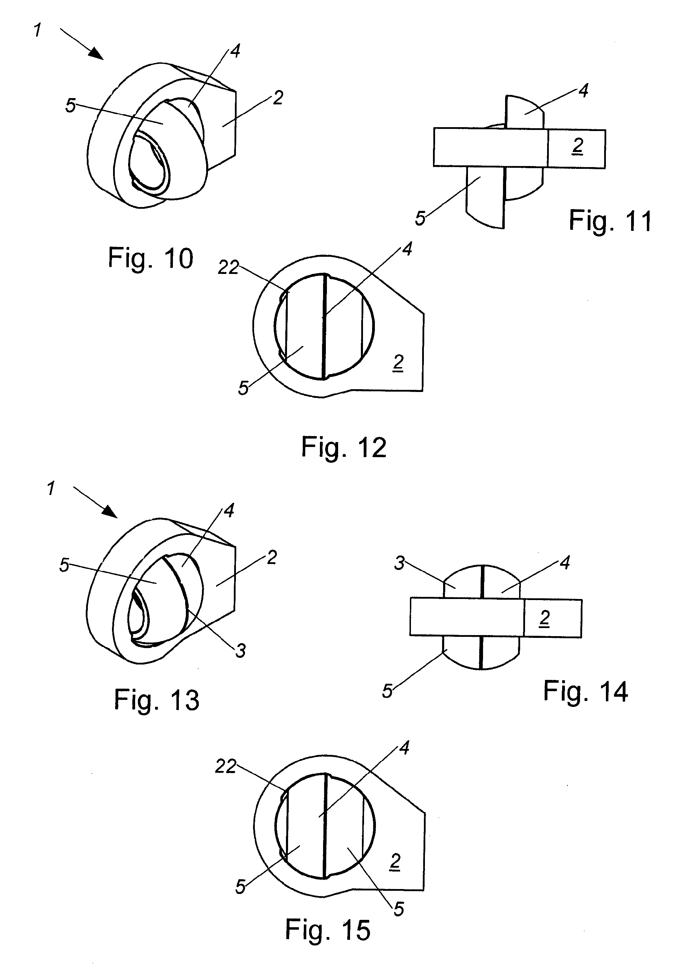

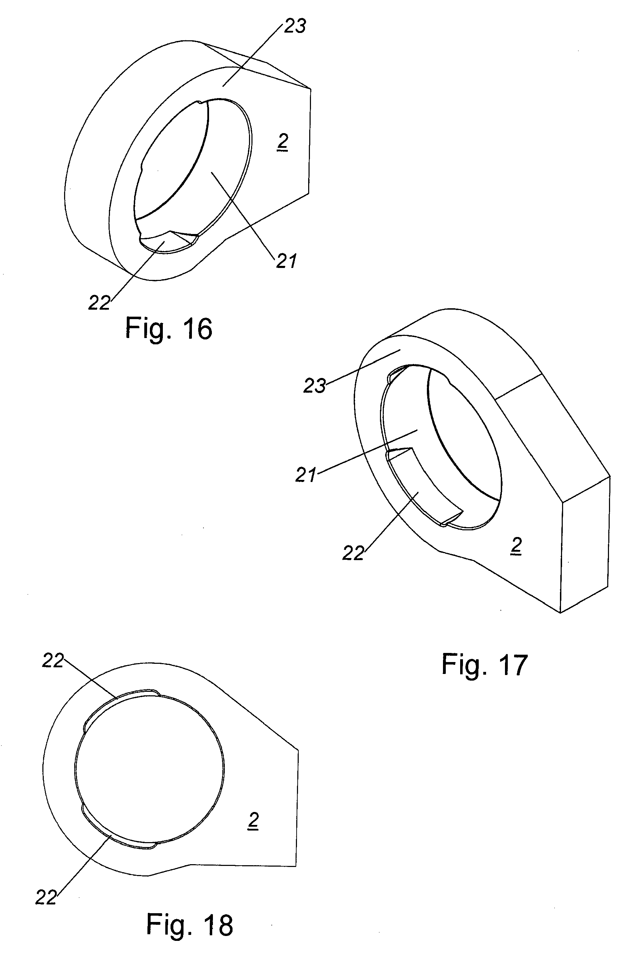

Die Fig. 1 bis 18 zeigen eine Axialverbindung 1 mit einem Schwenkbereich, umfassend ein Schalenelement 2 und ein zumindest bereichsweise in dem Schalenelement 2 angeordneten Kernelement 3, wobei eine zumindest bereichsweise als Kugelfläche ausgebildete Kontaktfläche 31 des Kernelementes 3 in Wirkkontakt mit einer zumindest bereichsweise gegengleich zur Kontaktfläche 31 des Kernelementes 3 ausgebildeten Kontaktfläche 21 des Schalenelementes 2 ist.

Das Kernelement 3 ist zweiteilig aus Teilelementen 4,5 ausgebildet und das Schalenelement 2 weist eine Einführausnehmung 22 zum Einführen der Teilelemente 4,5 auf.

Mit der Axialverbindung 1 können zwei Bauteile derart verbunden werden, dass einerseits Axialkräfte übertragen werden können und andererseits eine Verschwenkbewegung der Bauteile erfolgen kann. Die Axialkräfte werden zwischen der Kontaktfläche 31 des Kernelementes 3 und der Kontaktfläche 21 des Schalenelementes 2 übertragen. Neben Axialkräften können auch Radialkräfte auf diese Weise übertragen werden. Demgegenüber können Biegemomente durch eine Verschwenkung der Bauteile abgebaut werden, wodurch die Beanspruchungen der Bauteile gering gehalten werden können. Durch die als Kugelfläche ausgebildete Kontaktfläche 31 des Kernelementes 3 kann die Verschwenkung in jede Richtung erfolgen. Bei der Verschwenkung findet eine Gleitbewegung der Kontaktfläche 31 des Kernelementes 3 gegenüber der Kontaktfläche 21 des Schalenelementes 2 statt.

Das Kernelement 3 ist aus zwei Teilelementen 4,5 zusammengesetzt.

Dabei werden die Teilelemente 4,5 einzeln in das Schalenelement 2 eingebracht und zu dem Kernelement 3 zusammengesetzt.

Das Kernelement 3 kann im Wesentlichen die Form einer Kugel aufweisen, bei der an gegenüberliegenden Seiten Kugelkappen entfernt wurden. Dabei kann das Kernelement 3 gegenüberliegende Stirnflächen 33 aufweisen, welche im Wesentlichen parallel zueinander sind. An den Stirnflächen 33 kann ein Bauteil einfach angreifen und die Teilelemente 4,5 gegeneinander verspannen.

Das Kernelement 3 ist zweiteilig ausgebildet, hierdurch können sowohl der Zusammenbau des Kernelementes 3 in dem Schalenelement 2 sichergestellt werden, als auch die Anzahl der Einzelteile gering gehalten werden. Weiters kann ein günstiger Kraftfluss durch eine geringe Anzahl an Teilelementen 4,5 erreicht werden.

Das Schalenelement 2 kann einfach in einem blockförmigen Bereich eines Bauteiles ausgebildet sein, beispielsweise in einem Blechteil. Dabei können durch den Bauteil zwei im Wesentlichen parallele Stirnseiten 23 des Schalenelementes 2 vorgeben werden, zwischen denen eine Ausnehmung für die Anordnung des Kernelementes 3 ausgebildet wird. Nach Ausbildung der Ausnehmung mit der Kontaktfläche 21 und der Einführausnehmung 22 kann die Axialverbindung 1 ohne weitere erforderliche Umformprozesse oder spanende Nachbearbeitungen gebildet werden. Dabei kann die Axialverbindung einfach bei der Montage hergestellt werden und insbesondere bei einer Wartung auseinandergebaut und allfällige schadhafte Teile erneuert werden.

Das Kernelement 3 ist entlang eines umlaufenden Hauptkreises, insbesondere entlang einer Hauptebene, der Kugelfläche der Kontaktfläche 31 geteilt.

Bei zwei Teilelementen 4,5 können diese vorzugsweise im Wesentlichen symmetrisch ausgebildet sein. Dabei kann die Einführausnehmung 22 besonders klein ausgebildet werden, wodurch eine besonders hohe Belastbarkeit der Axialverbindung 1 sichergestellt werden kann.

Zur Anbindung des Kernelementes 3 an ein Bauteil kann vorgesehen sein, dass das Kernelement 3 eine Durchgangsöffnung 32 aufweist. Durch die Durchgangsöffnung 32 kann einfach ein Teil eines Bauteils geführt und mit dem Kernelement 3 verbunden werden. Dabei kann das Bauteil eine durch die Durchgangsöffnung 32 geführte Achse umfassen Mittels an zumindest eine der Stirnflächen 33 angreifende Spannelemente kann das Bauteil mit den Teilelementen 4,5 verspannt und so eine zuverlässige Verbindung erreicht werden.

Der Querschnitt der Durchgangsöffnung 32 kann rund ausgebildet sein, wobei eine gerades und rundes Durchgangsöffnung 32 besonders einfach hergestellt werden kann. Eine verbesserte Verdrehsicherheit des Bauteils gegenüber dem Kernelement 3 kann erzielt werden, wenn die Durchgangsöffnung 32 eine von einem Kreis abweichende Form aufweist, beispielsweise zusätzlich eine Nut-Feder-Verbindung vorgesehen ist oder die Durchgangsöffnung 32 einen elliptischen oder polygonalen Querschnitt aufweist.

Die Durchgangsöffnung 32 zumindest eines der Teilelemente 4,5 kann ein Innengewinde aufweisen, wodurch ein gegengleiches Zapfenelement mit einem Außengewinde mit dem Kernelement 3 verschraubt werden kann.

Als besonders günstig hat sich herausgestellt, wenn die Durchgangsöffnung 32 konisch ausgebildet ist. Dabei kann sie auf einen kegelförmigen Bereich eines Bauteils gespannt werden.

Weiters kann vorgesehen sein, dass die Teilelemente 4,5 eine Befestigungseinrichtung zum lösbaren Verbinden der Teilelemente untereinander umfassen. Durch die Befestigungseinrichtung kann eine Relativbewegung der Teilelemente 4,5 untereinander vermieden werden. Die Befestigungseinrichtung kann beispielsweise eine Schraubbefestigung darstellen. Es kann auch vorgesehen sein, dass die Befestigungseinrichtung als Nut-Feder-Verbindung ausgebildet ist.

Die Bewegbarkeit des Kernelementes 3 gegenüber dem Schalenelement 2 kann erhöht werden, indem die Kontaktfläche 21 der Lagerschale 2 und/oder die Kontaktfläche 31 des Kernelementes 3 eine reibungsvermindernde Beschichtung aufweisen.

Sowohl das Schalenelement 2 als auch die Teilelemente 4,5 können einfach maschinell ausgebildet werden, wobei sie insbesondere als Dreh-/Frästeile ausgestaltet werden können. Dadurch können ungewollte Verformungen oder Spannungen in den Elementen 2,3,4,5 vermieden werden. Weiters können die Elemente 2,3,4,5 besonders präzise gefertigt werden, wodurch eine Schwenkbewegung der Axialverbindung 1 auch bei einer großen Beanspruchung in axialer Richtung möglich ist.

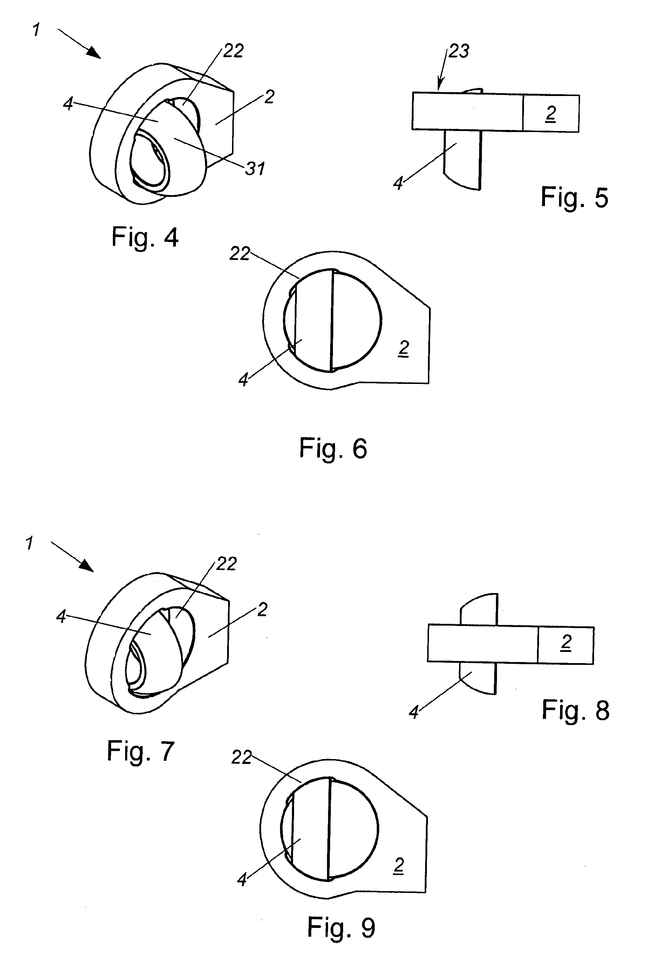

Die Axialverbindung 1 kann einfach hergestellt werden, indem eines der Teilelemente 4,5 des Kernelementes 3 über die Einführausnehmung 22 in das Schalenelement 2 eingebracht wird, anschließend das Teilelement 4,5 in dem Schalenelement 2 zur Freigabe der Einführausnehmung 22 verdreht wird, und nachfolgend ein weiteres der Teilelemente 4,5 des Kernelementes 3 über die Einführausnehmung 22 in das Schalenelement 2 eingebracht und das Kernelement 3 zusammengesetzt wird. Dieses Verfahren ist in den Fig. 4 bis 15 dargestellt.

Das Kernelement 3 wird in dem Schalenelement 2 so verdreht, dass die Zusammenstoßlinie der Teilelemente 4,5, welche an der Oberfläche des Kernelementes 3 ist, vollständig in dem Schalenelement 2 angeordnet ist und mit einer Kontaktfläche 21 des Schalenelementes 2 in Kontakt ist. Die Zusammenstoßlinie wird durch die Kanten der Teilelemente 4,5 gebildet, welche in dem Kernelement 3 angrenzend an ein anderes der Teilelemente 4,5 angeordnet sind. Diese Bereiche können in dem Schalenelement 2 vor Verschmutzung geschützt werden, wobei eine lange Lebensdauer der Axialverbindung erreicht werden kann.

Verwendung einer Axialverbindung 1 nach einem der Ansprüche 1 bis 9 zur Lagerung eines Hydraulikzylinders 6 einer Fahrzeuganhänger-Zwangslenkung.

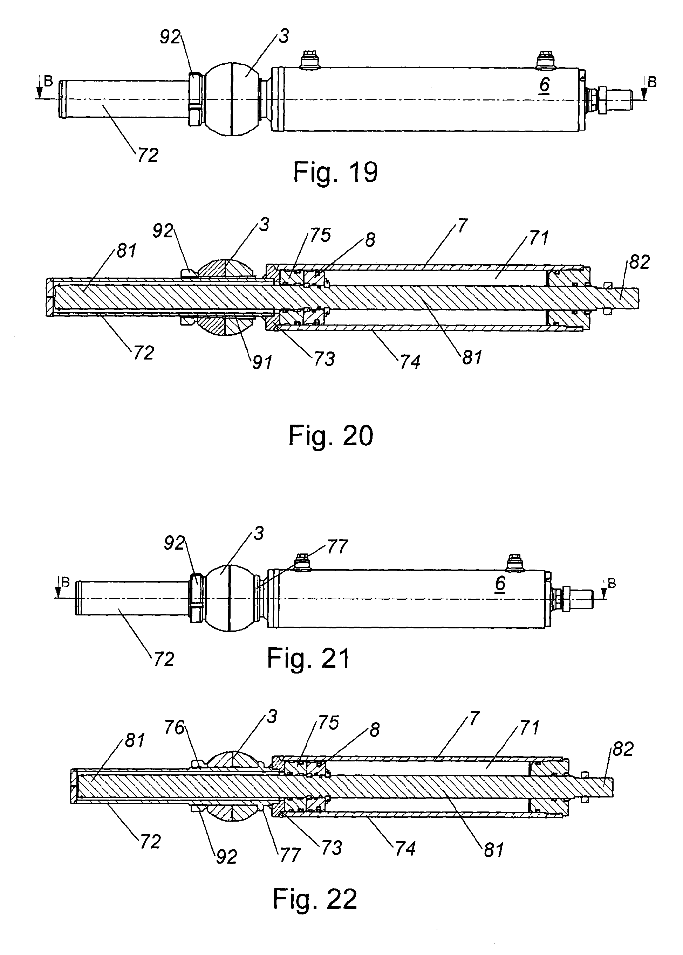

In den Fig. 19 bis 22 ist ein Hydraulikzylinder 6 dargestellt, dessen Zylinder 7 mit einer Axialverbindung 1 gelagert ist. Der Hydraulikzylinder 6 ist als Gleichgangzylinder ausgebildet. Bei dem Gleichgangzylinder 6 ist auf beiden Seiten des Kolbens 8 eine Kolbenstange 81 angeordnet, sodass die Wirkfläche für das im Zylinder 7 befindliche Fluid auf beiden Seiten des Kolbens 8 gleich groß ist.

Der Zylinder 7 weist einen Fluidraum 71 auf, in dem der Kolben bewegbar angeordnet ist. Anschließend an den Fluidraum 71 ist eine Hülse 72 angeordnet, in welcher die Kolbenstange 81 bewegbar ist. Die Hülse 72 ist mit einem Zylinderboden 73 verbunden, welcher mit einem Zylindermantel 74 des Fluidraumes 71 verbunden ist. Diese Verbindungen können insbesondere durch Schweißnähte gebildet sein.

In dem Fluidraum 71 ist angrenzend an den Zylinderboden 73 ein mit dem Zylinder 7 verbundener Kolbenboden 75 angeordnet, in welchem die Kolbenstange 81 gleiten kann. Mit diesem Kolbenboden 75 kann sichergestellt werden, dass Fluid aus dem Fluidraum 71 nicht in die Hülse 72 gelangen kann. Der Kolbenboden 75 kann mittels einer Fixierschraube mit dem Zylindermantel 74 und/oder dem Zylinderboden 73 verbunden sein.

Auf der Hülse 72 kann ein Aufsteckteil 91 angeordnet sein, welches bei der Ausführung gemäß den Fig. 19 und 20 eine konusförmige Außenoberfläche und einen Gewindeabschnitt aufweist. Die Axialverbindung 1 mit einer konusförmigen Durchgangsöffnung 32 kann auf die konusförmige Außenoberfläche aufgeschoben und mit einem Mutterelement 92 verspannt werden. Durch die von dem Mutterelement 92 auf die Axialverbindung 1 aufgebrachte Kraft kann die Axialverbindung 1 mit dem Aufsteckteil auf der Hülse 72 fixiert werden. Vorteilhaft dabei ist, dass die Axialverbindung 1 an jeder Stelle der Hülse 72 fixiert werden kann.

Bei der Ausführungsform gemäß den Fig. 21 und 22 weist die Hülse 72 ein Gewindeteil 76 und einen Anschlag 77 auf. Dabei kann die Axialverbindung 1 mit einer geraden Durchgangsöffnung 32 auf die Hülse 72 aufgeschoben werden und mit dem Mutterelement 92 verspannt werden. Dabei wird die Lage der Axialverbindung 1 von der Position des Anschlags 77 bestimmt.

Durch die Ausbildung der Hülse 72 kann der erforderliche Abstand zwischen dem Angriffsbereich 82 der Kolbenstange 81 und der Lagerung des Zylinders 7 gering gehalten werden, sodass bei einer vorgegebenen Verschublänge der Kolbenstange 81 eine kompakte Bauform erreicht werden kann. An dem Angriffsbereich 82 der Kolbenstange 81 können weitere Bauteile mit der Kolbenstange 81 verbunden werden.

Weiters kann mit der Axialverbindung 1 sichergestellt werden, dass die Kolbenstange 81 in der Axialverbindung 1 beweglich angeordnet ist und eine Verschwenkung um einen Drehpunkt, der im Wesentlichen mit der Achse der Kolbenstange 81 zusammenfällt, ermöglicht ist. Weiters ist eine Verschwenkung um jede zur Achse der Kolbenstange normale Drehachse möglich. Dabei kann sichergestellt werden, dass sich die Kolbenstange immer zwischen dem Angriffsbereich 82 der Kolbenstange 81 und der Axialverbindung 1 ausrichten kann und unerwünschte Biegebeanspruchungen des Hydraulikzylinders 6 vermieden werden. Dadurch kann eine hohe Lebensdauer und Zuverlässigkeit des Systems sichergestellt werden.

## Patentansprüche

1. Axialverbindung (1) mit einem Schwenkbereich, umfassend ein Schalenelement (2) und ein zumindest bereichsweise in dem Schalenelement (2) angeordnetes Kernelement (3), wobei eine zumindest bereichsweise als Kugelfläche ausgebildete Kontaktfläche (31) des Kernelementes (3) in Wirkkontakt mit einer zumindest bereichsweise gegengleich zur Kontaktfläche (31) des Kernelementes (3) ausgebildeten Kontaktfläche (21) des Schalenelementes (2) ist, wobei das Kernelement (3) aus Teilelementen (4,5) ausgebildet ist und dass das Schalenelement (2) eine Einführausnehmung (22) zum Einführen der Teilelemente (4,5) aufweist, wobei die Teilelemente (4,5) einzeln in das Schalenelement (2) einbringbar und in dem Schalenelement (2) zu dem Kernelement (3) zusammensetzbar sind, **dadurch gekennzeichnet, dass** das Kernelement (3) zweiteilig ausgebildet ist, und dass das Kernelement (3) entlang eines umlaufenden Hauptkreises der Kugelfläche der Kontaktfläche (31) geteilt ist.

2. Axialverbindung nach Anspruch 1, **dadurch gekennzeichnet, dass** die Teilelemente (4,5) und die Einführausnehmung (22) derart ausgebildet sind, dass eines der Teilelement (4,5) des Kernelementes (3) über die Einführausnehmung (22) in das Schalenelement (2) eingebracht wird, wobei das Teilelement (4,5) in dem Schalenelement (2) zur Freigabe der Einführausnehmung (22) verdreht wird, und nachfolgend ein weiteres der Teilelemente (4,5) des Kernelementes (3) über die Einführausnehmung (22) in das Schalenelement (2) eingebracht und das Kernelement (3) zusammengesetzt wird.

3. Axialverbindung nach Anspruch 1 oder 2, **dadurch gekennzeichnet, dass** das Kernelement (3) entlang einer Hauptebene der Kugelfläche der Kontaktfläche (31) geteilt ist.

4. Axialverbindung einem der Ansprüche 1 bis 3, **dadurch gekennzeichnet, dass** das Kernelement (3) eine Durchgangsöffnung (32) aufweist.

5. Axialverbindung nach Anspruch 4, **dadurch gekennzeichnet, dass** die Durchgangsöffnung (32) konisch ausgebildet ist.

6. Axialverbindung nach Anspruch 4 oder 5, **dadurch gekennzeichnet, dass** die Durchgangsöffnung (32) zumindest eines der Teilelemente (4,5) ein Innengewinde aufweist.

7. Axialverbindung nach einem der Ansprüche 1 bis 6, **dadurch gekennzeichnet, dass** die Teilelemente (4,5) eine Befestigungseinrichtung zum lösbaren Verbinden der Teilelemente (4,5) untereinander umfassen.

8. Axialverbindung nach einem der Ansprüche 1 bis 7, **dadurch gekennzeichnet, dass** die Kontaktfläche (21) der Lagerschale (2) und/oder die Kontaktfläche (31) des Kernelementes (3) eine reibungsvermindernde Beschichtung aufweisen.

9. Axialverbindung nach einem der Ansprüche 1 bis 8, **dadurch gekennzeichnet, dass** das Schalenelement (2) und die Teilelemente (4,5) Dreh-/Frästeile sind.

10. Verfahren zum Herstellen einer Axialverbindung nach einem der Ansprüche 1 bis 9, **dadurch gekennzeichnet, dass** ein Teilelement (4,5) eines Kernelementes (3) über eine Einführausnehmung (22) in ein Schalenelement (2) eingebracht wird, anschließend das Teilelement (4,5) in dem Schalenelement (2) zur Freigabe der Einführausnehmung (22) verdreht wird, und nachfolgend ein weiteres der Teilelemente (4,5) des Kernelementes (3) über die Einführausnehmung (22) in das Schalenelement (2) eingebracht und das Kernelement (3) zusammengesetzt wird.

11. Verfahren nach Anspruch 10, **dadurch gekennzeichnet, dass** das Kernelement (3) in dem Schalenelement (2) so verdreht wird, dass die Zusammenstoßlinie der Teilelemente (4,5), welche an der Oberfläche des Kernelementes (3) ist, vollständig in dem Schalenelement (2) angeordnet ist und mit einer Kontaktfläche (21) des Schalenelementes (2) in Kontakt ist.

12. Verwendung einer Axialverbindung nach einem der Ansprüche 1 bis 9 zur Lagerung eines Hydraulikzylinders (6) einer Fahrzeuganhänger-Zwangslenkung,

## Claims

1. An axial connection (1) with a pivoting region, comprising a shell element (2) and a core element (3) arranged at least in certain regions in the shell element (2), wherein a contact surface (31) of the core element (3), which contact surface is formed at least in certain regions as a spherical surface, is in operative contact with a contact surface (21) of the shell element (2) which is formed at least in certain regions in a mirror-inverted manner to the contact surface (31) of the core element (3), wherein the core element (3) is formed from subcomponents (4, 5) and the shell element (2) comprises an insertion recess (22) for inserting the subcomponents (4, 5), wherein the subcomponents (4, 5) can be introduced individually into the shell element (2) and can be assembled in the shell element (2) into the core element (3), **characterized in that** the core element (3) is formed in two parts, and the core element (3) is divided along a circumferential great circle of the spherical surface of the contact surface (31).

2. An axial connection according to claim 1, **characterized in that** the subcomponents (4, 5) and the insertion recess (22) are formed in such a way that one of the subcomponents (4, 5) of the core element (3) is introduced via the insertion recess (22) into the shell element (2), wherein the subcomponent (4, 5) is twisted in the shell element (2) for releasing the insertion recess (22), and subsequently a further one of the subcomponents (4, 5) of the core element (3) is introduced via the insertion recess (22) into the shell element (2) and the core element (3) is assembled.

3. An axial connection according to claim 1 or 2, **characterized in that** core element (3) is divided along a main plane of the spherical surface of the contact surface (31).

4. An axial connection according to one of the claims 1 to 3, **characterized in that** core element (3) comprises a pass-through opening (32).

5. An axial connection according to claim 4, **characterized in that** the pass-through opening (32) is formed in a conical manner.

6. An axial connection according to claim 4 or 5, **characterized in that** the pass-through opening (32) of at least one of the subcomponents (4, 5) comprises an internal thread.

7. An axial connection according to one of the claims 1 to 6, **characterized in that** the subcomponents (4, 5) comprise a fastening device for the releasable connection of the subcomponents (4, 5) among each other.

8. An axial connection according to one of the claims 1 to 7, **characterized in that** the contact surface (21) of the bearing shell (2) and/or the contact surface (31) of the core element (3) have a friction-reducing coating.

9. An axial connection according to one of the claims 1 to 8, **characterized in that** the shell element (2) and the subcomponents (4, 5) are turned/milled parts.

10. A method for producing an axial connection according to one of the claims 1 to 9, **characterized in that** a subcomponent (4, 5) of a core element (3) is introduced via an insertion recess (22) into a shell element (2), the subcomponent (4, 5) is subsequently twisted in the shell element (2) for releasing the insertion recess (22), and subsequently a further one of the subcomponents (4, 5) of the core element (3) is introduced via the insertion recess (22) into the shell element (2) and the core element (3) is assembled.

11. A method according to claim 10, **characterized in that** the core element (3) is twisted in the shell element (2) in such a way that the collision line of the subcomponents (4, 5), which is on the surface of the core element (3), is arranged completely in the shell element (2) and is in contact with a contact surface (21) of the shell element (2).

12. The use of an axial connection according to one of the claims 1 to 9 for mounting a hydraulic cylinder (6) of a forced steering of a vehicle trailer.

## Revendications

1. Joint axial (1) avec une plage de pivotement, comprenant un élément de coquille (2) et un élément de rotule (3) au moins partiellement disposé dans l'élément de coquille (2), dans lequel une surface de contact (31) de l'élément de rotule (3) conformée au moins en partie comme une surface sphérique est en contact actif avec une surface de contact (21) de l'élément de coquille (2) au moins en partie symétrique de la surface de contact (31) de l'élément de rotule (3), dans lequel l'élément de rotule (3) est formé de parties d'élément (4, 5) et l'élément de coquille (2) présente un creux d'introduction (22) pour l'introduction des parties d'élément (4, 5), lesquelles parties d'élément (4, 5) peuvent être introduites séparément dans l'élément de coquille (2) et pouvant être assemblées dans l'élément de coquille (2) pour former l'élément de rotule (3), **caractérisé en ce que** l'élément de rotule (3) est formé de deux parties et **en ce que** l'élément de rotule (3) est partagé le long d'un cercle principal circonférentiel de la surface sphérique de la surface de contact (31).

2. Joint axial selon la revendication 1, **caractérisé en ce que** les parties d'élément (4, 5) et le creux d'introduction (22) sont conformés de telle manière que l'une des parties d'élément (4, 5) de l'élément de rotule (3) est introduite en passant par le creux d'introduction (22) dans l'élément de coquille (2), les parties d'élément (4, 5) étant tournées dans l'élément de coquille (2) pour dégager le creux d'introduction (22), et une autre des parties d'élément (4, 5) de l'élément de rotule (3) étant introduite en passant par le creux d'introduction (22) dans l'élément de coquille (2) et l'élément de rotule (3) assemblé.

3. Joint axial selon la revendication 1 ou 2, **caractérisé en ce que** l'élément de rotule (3) est partagé le long d'un plan principal de la surface sphérique de la surface de contact (31).

4. Joint axial selon l'une des revendications 1 à 3, **caractérisé en ce que** l'élément de rotule (3) présente une ouverture de passage (32).

5. Joint axial selon la revendication 4, **caractérisé en ce que** l'ouverture de passage (32) est de forme conique.

6. Joint axial selon la revendication 4 ou 5, **caractérisé en ce que** l'ouverture de passage (32) d'au moins une des parties d'élément (4, 5) présente un filetage intérieur.

7. Joint axial selon l'une des revendications 1 à 6, **caractérisé en ce que** les parties d'élément (4, 5) comprennent un dispositif de fixation pour l'assemblage amovible des parties d'élément (4, 5).

8. Joint axial selon l'une des revendications 1 à 7, **caractérisé en ce que** la surface de contact (21) de la coquille de palier (2) et/ou la surface de contact (31) de l'élément de rotule (3) présentent un revêtement qui réduit le frottement.

9. Joint axial selon l'une des revendications 1 à 8, **caractérisé en ce que** l'élément de coquille (2) et les parties d'élément (4, 5) sont des pièces tournées ou fraisées.

10. Procédé de fabrication d'un joint axial selon l'une des revendications 1 à 9, **caractérisé en ce qu'**une partie d'élément (4, 5) d'un élément de rotule (3) est introduite en passant par un creux d'introduction (22) dans un élément de coquille (2), puis la partie d'élément (4, 5) est tournée dans l'élément de coquille (2) pour dégager le creux d'introduction (22) et une autre des parties d'élément (4, 5) de l'élément de rotule (3) est ensuite introduite en passant par le creux d'introduction (22) dans l'élément de coquille (2) et l'élément de rotule (3) est assemblé.

11. Procédé selon la revendication 10, **caractérisé en ce que** l'élément de rotule (3) est tourné dans l'élément de coquille (2) de telle manière que la ligne de jonction des parties d'élément (4, 5), qui se trouve sur la surface de l'élément de rotule (3), soit entièrement disposée dans l'élément de coquille (2) et en contact avec une surface de contact (21) de l'élément de coquille (2).

12. Utilisation d'un joint axial selon l'une des revendications 1 à 9 pour le support d'un vérin hydraulique (6) dans un attelage à braquage actif de remorque de véhicule.
